# EUROPÄISCHE PATENTANMELDUNG

(11) **EP 1 336 825 A2**
(43) Veröffentlichungstag der Anmeldung: **20.08.2003**
(21) Anmeldenummer: 03002965.6
(22) Anmeldetag: 11.02.2003
(51) Int. Cl.: G01G 19/414, G01G 19/44

(54) **Messvorrichtung für eine Körperanalysewaage**

(30) Priorität: 13.02.2002 DE 10205822
(71) Anmelder: Soehnle-Waagen GmbH & Co. KG, 71540 Murrhardt (DE)
(72) Erfinder: Nahm, Werner, Dr., 74426 Bühlerzell (DE)

(57) **Zusammenfassung**

Die Erfindung betrifft eine Meßvorrichtung für eine Körperanalysewaage mit Meßelektroden auf der Trittplatte 1 und mit personen- und funktionsbezogenen Schaltem. Für eine erleichterte Nutzung, kostengünstigere Fertigung und vereinfachte Bedienung wird vorgeschlagen, daß Elektroden 2a, 2b; 3a, 3b auf der Trittplatte 1 angebracht sind, die sowohl als Meßelektroden als auch als personenund funktionsbezogene Schalter ausgeführt sind.

## Beschreibung

Die Erfindung betrifft eine Messvorrichtung für eine Körperanalysewaage gemäß dem Oberbegriff des Patentanspruches 1.

Die bekanntesten Körperanalysewaagen sind die seit einigen Jahren stark am Markt vertretenen Körperfettmesswaagen. Diese Personenwaagen messen neben dem Körpergewicht über auf der Trittplatte angeordneten Elektroden auch die bioelektrische Impedanz der die Waage benützenden Person. Dabei sind in aller Regel mehrere Messfelder vorgesehen, die gezielt mit den Füßen betreten werden müssen. Zusätzlich sind personen- und funktionsbezogene Schalter vorgesehen. Dies sind zum Beispiel Ein/Aus-Schalter, Eingabeschalter für die personenspezifischen Daten für die Fettmessung, wie Alter, Geschlecht, Größe und schließlich Schalter für die Zuordnung der einzelnen Personen, wobei hier bis zu vier Personen vorgesehen sind. Eine derartige Vielfalt von Funktionen bedingt naturgemäß auch eine aufwendige Fertigung. Schließlich sind diese Körperanalysewaagen nur nach gründlichem Studium einer Bedienungsanleitung zu nutzen. Weiter ist es erforderlich, dass die diese Waage benutzende Person zum Einschalten beziehungsweise zur Betätigung des Schalters zur Personenerkennung sich bücken muss oder durch sehr genaue Dosierung mit dem Fuß diesen Schalter zu bedienen hat.

Aufgabe der Erfindung ist es, eine Messvorrichtung für eine Körperanalysewaage zu schaffen, die die Nutzung wesentlich erleichtert, eine kostengünstigere Fertigung ermöglicht und eine Bedienung ohne Bücken gestattet, und diese vereinfacht.

Diese Aufgabe wird mit dem kennzeichnenden Merkmalen des Anspruchs 1 gelöst.

Damit wird es möglich, auf der Trittplatte einer Waage sowohl zu messen als auch zu schalten. Dabei kann Messen und Schalten sehr weit definiert sein, denn es ist auch möglich, personenbezogene Einstellungen vorzunehmen und eine Personenidentifikation durchzuführen.

Weitere Ausgestaltungen der Erfindung sind den Unteransprüchen zu entnehmen.

Durch die entsprechende formale Anordnung der Elektroden auf der Trittplatte bleibt für den Designer eine große Gestaltungsfreiheit. Die Elektroden können paarweise beziehungsweise mehrfach angeordnet werden, wodurch auch bei ungenauer Positionierung der die Körperanalysewaage benutzende Person auf der Trittplatte ein sicheres Messen beziehungsweise Schalten erreicht wird. Es genügt auf jeden Fall die Berührung mit dem Fuß, ein beschwerliches Bücken zum Betätigen von Schaltern ist nicht mehr erforderlich.

Durch die Möglichkeit, die Elektroden drucktechnisch auf der Trittplatte anzubringen, wird insbesondere die Massenfertigung sehr vereinfacht und damit kostenoptimiert. Insbesondere bei einer Glaswaage werden große Gestaltungsfreiräume ermöglicht. Dies reicht so weit, dass die Glasplatte als Elektronikplatine mit der Gesamtschaltung ausgebildet ist.

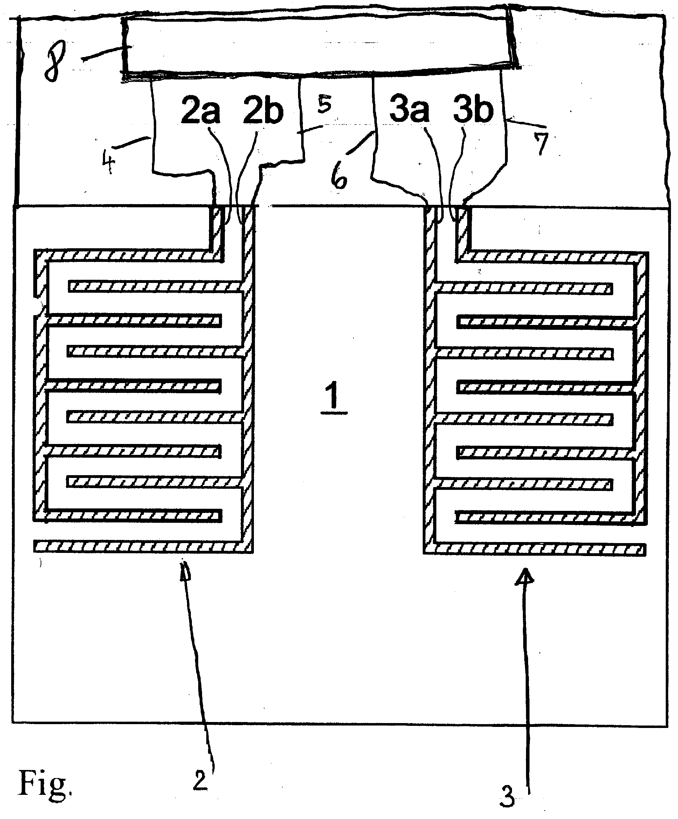

Ein Ausführungsbeispiel ist anhand der Zeichnung nochmals näher erläutert.

Mit 1 ist die Trittplatte einer Körperanalysewaage gekennzeichnet. Auf dieser sind beispielhaft 4 Kontaktelektroden 2a, 2b und 3a, 3b aufgedruckt. Diese sind über Leiterbahnen 4, 5,6 und 7 mit einer Elektronik- und Auswerteeinheit 8 verbunden.

Wie aus der Abbildung leicht zu erkennen ist, sind die Elektroden jeweils paarweise kammartig ineinander verzahnt, sodass zwei Berührungsschalter 2 und 3 realisiert sind. Der Schaltkontakt wird erzeugt, wenn die Kammstrukturen durch den Fuß des Benutzers überbrückt werden.

Zum Zweck der Bioimpedanzanalyse können die gleichen 4 Elektroden je nach Messaufgabe sowohl einzeln geschaltet, als auch in Gruppen zusammengefasst werden.

## Patentansprüche

1. Messvorrichtung für eine Körperanalysewaage mit Messelektroden auf der Trittplatte (1) und mit personen- und funktionsbezogenen Schaltem, **dadurch gekennzeichnet, dass** Elektroden (2a, 2b; 3a, 3b) auf der Trittplatte (1) angebracht sind, die sowohl als Messelektroden, als auch als personen- und funktionsbezogene Schalter ausgeführt sind.

2. Messvorrichtung nach Anspruch 1, **dadurch gekennzeichnet, dass** die Elektroden (2a, 2b; 3a, 3b) mäanderförmig angebracht sind.

3. Messvorrichtung nach Anspruch 1, **dadurch gekennzeichnet, dass** die Elektroden wellenförmig angebracht sind.

4. Messvorrichtung nach Anspruch 1, **dadurch gekennzeichnet, dass** die Elektroden als verzahnte Kammstruktur ausgebildet sind.

5. Messvorrichtung nach einem der Ansprüche 1 bis 4, **dadurch gekennzeichnet, dass** Elektroden gleicher Funktion mehrfach vorgesehen sind.

6. Messvorrichtung nach einem der Ansprüche 1 bis 5, **dadurch gekennzeichnet, dass** die Elektroden drucktechnisch auf der Trittplatte (1) angebracht sind.

7. Messvorrichtung nach einem der Ansprüche 1 bis 6, **dadurch gekennzeichnet, dass** die Trittplatte (1) aus Glas gefertigt ist.

8. Messvorrichtung nach Anspruch 7, **dadurch gekennzeichnet, dass** die Trittplatte (1) als Elektronikplatine ausgebildet ist.
